# EUROPÄISCHE PATENTSCHRIFT

(11) **EP 0 885 676 B1**
(45) Veröffentlichungstag und Bekanntmachung des Hinweises auf die Patenterteilung: **19.07.2000**
(21) Anmeldenummer: 98108661.4
(22) Anmeldetag: 13.05.1998
(51) Int. Cl.: B23B 27/22, C21D 9/22

(54) **Verfahren zur Beeinflussung des Spanflussverhaltens von Werkzeugflächen**
Method for influencing the chip flow behaviour on tool surfaces
Procédé permettant d'influencer les caractéristiques de l'écoulement de copeau sur des surfaces d'outil

(30) Priorität: 10.06.1997 DE 19724319
(43) Veröffentlichungstag der Anmeldung: 23.12.1998
(73) Patentinhaber: Wilhelm Fette GmbH, 21493 Schwarzenbek (DE)
(72) Erfinder: Kölker, Werner, 23909 Ratzeburg (DE)
(74) Vertreter: Patentanwälte Hauck, Graalfs, Wehnert, Döring, Siemons

(56) Entgegenhaltungen:
- EP-A- 0 404 744
- EP-A- 0 425 812
- WO-A-96/14954
- US-A- 4 335 295

## Beschreibung

Die Erfindung bezieht sich auf ein Verfahren zur Beeinflussung des Spanflußverhaltens von Werkzeugflächen nach dem Oberbegriff des Patentanspruchs 1.

Bei Werkzeugen zum Spanen unterscheidet man zwischen solchen mit geometrisch bestimmter Schneide und geometrisch unbestimmter Schneide. Die vorliegende Erfindung befaßt sich nur mit Werkzeugen mit geometrisch bestimmter Schneide, z.B. Fräser, Bohrer oder dergleichen.

Die Geometrie von Schneidwerkzeugen wird u.a. danach ausgelegt, daß ein günstiges Spanflußverhalten erzielt wird. Erwünscht sind Späne, die nach Form und Länge so gebildet sind, daß sie leicht und schnell abgeführt werden können. Ein Spanstau, der die Kontinuität der Bearbeitung beeinträchtigt, und unerwünschte Temperaturbeeinflussungen auf die Oberfläche des Werkstücks sollen vermieden werden. Für das Spanflußverhalten ist jedoch nicht allein die Geometrie des Schneidwerkzeugs maßgeblich, insbesondere der Spanfläche, sondern auch die Beschaffenheit des Schneidstoffs selbst. Die Schneidstoffe unterscheiden sich nicht nur nach ihrer Härte und Standfestigkeit, sondern auch in ihrem Reibkoeffizienten. Dieser wird aber auch entscheidend beeinflußt durch die Oberflächenrauhigkeit. Bekanntlich reduziert eine rauhe Oberfläche die Fließgeschwindigkeit des Spanes, während eine glatte Oberfläche sie erhöht.

Zur Erhöhung der Standfestigkeit von Schneidwerkzeugen ist bekannt, etwa aus US 4 708 542, diese mit einer oder mehreren Hartstoffschichten, z.B. TiN, zu beschichten. Hierzu gibt es mehrere geeignete Verfahren. Es erweist sich jedoch, daß eine derartige Beschichtung das Spanflußverhalten zum Teil erheblich verändert, auch wenn an der Geometrie des Werkzeugs nichts verändert wird. Eine derartige Beschichtung hat zumeist einen geringeren Reibkoeffizienten als herkömmliche Schneidstoffe. Die erhöhte Fließgeschwindigkeit aufgrund der Beschichtung führt jedoch zu einer Spanbildung, welche die Spanabfuhr beeinträchtigen kann.

Zur Behebung des zuletzt beschriebenen Nachteils ist aus DE 43 19 789 C2 bekannt, die Spanfläche nach dem Beschichten des Werkzeugs zu schleifen, um eine günstigere Spanabfuhr zu erzielen. Nachteilig sind jedoch der zusätzliche Bearbeitungsgang und geringere Werkzeugstandzeiten. Außerdem fehlt es an Erfahrungen, in welcher Form und in welchem Umfang das Abschleifen der Beschichtung erfolgen muß, um ein optimales Spanflußverhalten zu erreichen.

Es ist allgemein bekannt, Werkzeuge, z.B. Wendeschneidplatten, im Sinterpreßverfahren herzustellen. Zur Beeinflussung der Rauhigkeit im Bereich der Flächen, an denen die Späne entlang gleiten, ist in diesem Zusammenhang aus DE 44 31 796 A1 oder W095/29782 A1 bekanntgeworden, der Spanfläche eine bestimmte Topographie zu verleihen, welche auf den Spanfluß der Schneidplatte Einfluß nimmt. Nachteilig an dem Verfahren ist, daß es nur für durch Sinterpressen geformte Werkzeuge angewendet werden kann. Durch Sinterverfahren hergestellte Werkzeuge leiden häufig an mangelnder Präzision. Sie werden deshalb manchmal auch nachgeschliffen.

Aus AMENDE, W.: Exakt begrenzte Härtezonen, in: Industrieanzeiger EXTRA vom 18.9.1987, S. 50-52 oder DE-Z: INDUSTRIEANZEIGER 17/95, Werkzeug für alle Fälle, S. 40-41, ist bekanntgeworden, mittels Laser Werkzeuge zu bearbeiten, um deren Oberfläche in den Randzonen zu härten oder auch bestimmte verschleißschützende Schichten aufzubringen. Aus ROSENTHAL, A.R.: Laserstrahloberflächenbearbeitung zum Vorspannen scheibenförmiger Werkzeuge, in: IDR 4/91, S. 220-225 ist ferner bekanntgeworden, mittels Laser im Randbereich von Kreissägeblättern Laserspuren vorzusehen mit dem Ziel, hohe Zugspannungen im Randbereich des Werkzeugs zu induzieren, um zur Kompensation von Lastspannungen beizutragen.

Ein Verfahren gemäß dem Oberbegriff des Anspruchs 1 ist bekannt aus der EP 425 812 A.

Der Erfindung liegt daher die Aufgabe zugrunde, ein Verfahren anzugegeben, bei dem mit den Spänen in Berührung kommende Flächen von spangebenden Werkzeugen mit geometrisch bestimmter Schneide in ihrem den Spanfluß bestimmenden Verhalten in wirtschaftlicher Weise verändert werden.

Diese Aufgabe wird mit den Merkmalen des Patentanspruchs 1 gelöst.

Bei dem erfindungsgemäßen Verfahren wird mit Hilfe einer Laserbestrahlung zumindest die Spanfläche im geringen Abstand zur Schneidkante mit einem geometrischen Muster versehen. Das Muster kann nach einer Ausgestaltung der Erfindung aus einer Reihe von Strichen und/oder Punkten bestehen, etwa aus einem Streifen oder einer Spur aus Strichen und/oder Punkten, welcher im Abstand zur Schneidkante verläuft.

Die Laserbestrahlung ist derart, daß im Bereich des Substratmaterials oberflächlich eine Umschmelzung und möglicherweise eine Oxidation erzeugt wird, wodurch eine erhöhte Oberflächenrauhigkeit entsteht, die Einfluß auf die Spangeschwindigkeit hat. Durch eine bestimmte Richtungsgebung der das Muster bildenden Markierungen läßt sich nicht nur die Fließgeschwindigkeit, sondern auch die Fließrichtung beeinflussen. So kann z.B. der erwähnte Markierungsstreifen nahe der Schneidkante aus parallel beabstandeten Strichmarkierungen bestehen, die quer zur Schneidkante verlaufen, etwa im rechten Winkel oder in einem anderen Winkel.

Ein gewisser Abstand zur Schneidkante ist vorteilhaft, da sonst die Gefahr besteht, daß durch die Umschmelzung und ggf. Oxidation das Material für die Zerspanung nicht mehr gut geeignet ist. Auch können von diesen Stellen bruchinitiierende Kerbwirkungen ausgehen.

Das erfindungsgemäße Verfahren ist nicht auf geometrisch einfach geformte Werkzeuge, wie Wendeplatten, beschränkt, vielmehr können auch komplizierte Werkzeuge, wie gedrallte Schaftfräser, Spiralbohrer, Gewindebohrer oder Wälzfräser, mit einer durch Laserbestrahlung erzeugten Topographie gewünschter Struktur versehen werden. Ferner ist die Erfindung nicht beschränkt auf die Herstellung des Werkzeugs, vielmehr können durch Sinterpressung geformte Werkzeuge oder auch hochpräzise geschliffene Werkzeuge dem erfindungsgemäßen Verfahren unterworfen werden.

Mit Hilfe des erfindungsgemäßen Verfahrens läßt sich auch ein optischer bzw. ästhetischer Effekt erzielen.

Die Erfindung ist nicht beschränkt auf die Art der Änderung der Oberflächenstruktur, die durch Bestrahlung mit einem Laser erhalten wird. So ist auch denkbar, eine zusätzliche Schicht im gewünschten Flächenbereich mit gewünschten, den Spanfluß beeinflussenden Eigenschaften mittels eines Laserstrahls aufzutragen.

Nach einer Ausgestaltung der Erfindung wird daher mittels einer Laserbestrahlung auch die Freifläche im geringen Abstand zur Schneidkante mit einer Markierung versehen derart, daß ein Verschleiß der Schneidkante bestimmbar ist.

Die Bedienungsperson kann durch einen Blick auf die markierte Freifläche erkennen, ob und in welchem Maß ein Verschleiß stattgefunden hat. Erreicht der Verschleiß eine vorgegebene Marke, muß das Werkzeug aus dem Betrieb genommen werden oder im Fall einer Wendeplatte gedreht oder ausgetauscht werden.

Es ist bereits bekannt, Werkzeuge mit Kenndaten zu markieren, indem sie mit einer Laserlichtquelle bestrahlt werden.(Laserbeschriftung). Hierzu wird zumeist ein Gaspulslaser verwendet, bei dem das Licht über eine Maske auf das Objekt gerichtet wird. Es ist denkbar, auch für das erfindungsgemäße Verfahren derartige Pulslaser einzusetzen. Vorzuziehen ist jedoch ein taktweise betriebener Festkörperlaser mit einem Diodenlaser als Pumpenergiequelle. In welcher Weise der Laser bzw. das Werkstück gesteuert und/oder vorgeschoben wird, damit das gewünschte Muster auf der Oberfläche des Werkstücks aufgebracht wird, ist nicht Gegenstand der vorliegenden Anmeldung und bleibt dem Fachmann überlassen.

Eingangs wurde erwähnt, daß in vielen Fällen an Werkzeugen eine Hartstoffbeschichtung vorgenommen wird. Bei hartstoffbeschichteten Werkzeugen erfolgt das Aufbringen eines Musters durch Laserbestrahlung vor dem Beschichten. Es hat sich herausgestellt, daß der Bereich, in dem eine Änderung der Topographie der Werkstückfläche durch Laserbestrahlung vorgenommen wurde, auch nach dem Beschichten anders ausfällt als die übrige Beschichtung. Im übrigen bleiben Vertiefungen, die durch die Laserbestrahlung erzeugt werden, auch nach der Beschichtung mehr oder weniger erhalten.

Die Erfindung wird nachfolgend anhand von Beispielen näher erläutert.
- Fig. 1: zeigt perspektivisch eine Wendeschneidplatte mit einer Bearbeitung nach dem erfindungsgemäßen Verfahren.
- Fig. 2: zeigt perspektivisch eine Spitze eines Schaftfräsers, die nach dem erfindungsgemäßen Verfahren bearbeitet wurde.

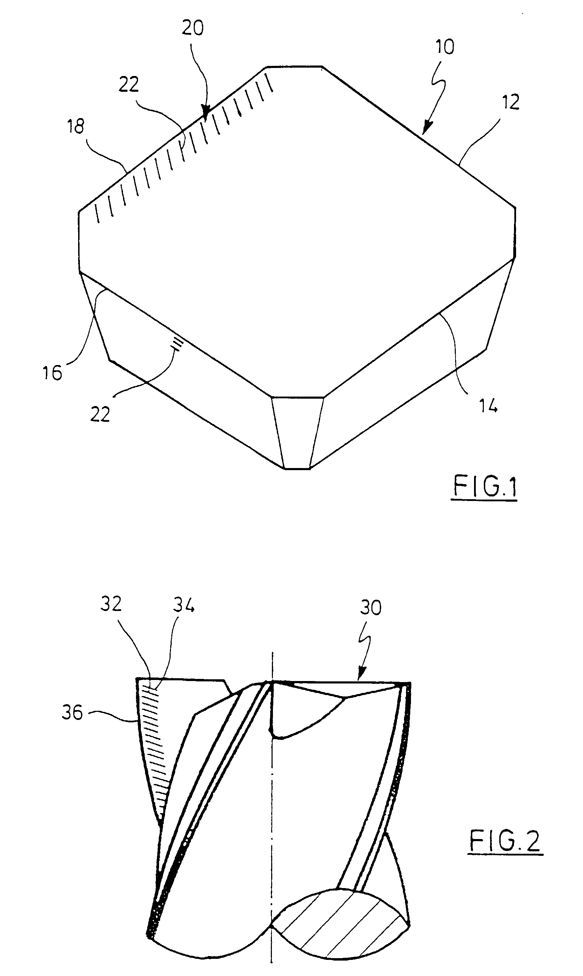

In Fig. 1 ist eine quadratische Wendeschneidfläche zu erkennen mit vier Schneidkanten 12, 14, 16 und 18. Die zugehörigen Spanflächen sind nicht deutlich zu erkennen .Sie werden zumeist durch eine muldenartige Ausführung der Oberseite der Wendeschneidplatte 10 gebildet. Dies ist jedoch allgemein Stand der Technik. Auch die genaue Form der Freiflächen kann der Abbildung nach Fig. 1 nicht entnommen werden. Fig. list jedoch zu entnehmen, daß parallel zur Schneidkante 18 im relativ geringen Abstand dazu eine Spur 20 geformt ist, bestehend aus einer Anzahl von Strichen 22, die im Abstand parallel zueinander verlaufen. Die Striche erstrecken sich annähernd senkrecht zur Schneidkante 18 und werden durch Laserbestrahlung erzeugt. Durch Änderung des Winkels läßt sich ein anderes Spanflußverhalten erzeugen. Die Striche sind mehr oder weniger tiefe Furchen oder Rillen, die in die Oberfläche des Materials der Wendeschneidplatte 10 eingeformt sind. Für den Fall, daß es sich um eine beschichtete Wendeschneidplatte handelt, wird das Muster 20 vor dem Beschichten auf das Substratmaterial aufgebracht. Es versteht sich, daß die den anderen Schneidkanten 12, 14 und 16 zugeordneten Spanflächen mit einer ähnlichen Topographie wie der Spur 20 versehen werden kann.

Aufgabe der Oberflächenstruktur, welche durch die Spur 20 erzeugt wird, ist, das Fließverhalten der geformten Späne und/oder die Spanform optimal zu gestalten. Darüber hinaus läßt sich auch durch eine spezifische Geometrie der Struktur die Fließrichtung der Späne beeinflussen.

In Fig. list ferner zu erkennen, daß eine weitere Spur 22 aus kurzen parallel zur Schneidkante 16 gebildeten Strichen in der zugeordneten Freifläche geformt ist. Sie ist ebenfalls durch Laserbestrahlung hergestellt. Der erste der drei Striche liegt relativ nahe an der Schneidkante 16. Mit Hilfe des Musters 22 läßt sich der Verschleiß an der Schneidkante 16 beobachten. Es versteht sich, daß auch an den anderen Freiflächen ein entsprechendes Muster geformt werden kann.

Bei der Fräserspitze 30 nach Fig. 2 ist zu erkennen, daß eine Spur 32 aus einzelnen parallel und im Abstand angeordneten Strichen 34 parallel und im Abstand zur Schneidkante 36 geformt ist. Dies geschieht in gleicher Weise wie oben zu Fig. 1 ausgeführt. Auch in diesem Fall verlaufen die Rillen oder Striche annähernd senkrecht zur Schneidkante 36. Durch Änderung des Winkels läßt sich ein anderes Spanflußverhalten erzeugen. Auch bei solchermaßen gestalteten Werkzeugen können Muster an den Freiflächen oder an anderen Werkzeugfünktionsflächen erzeugt werden.

## Patentansprüche

1. Verfahren zur Beeinflussung des Spanflußverhaltens von Werkzeugflächen im Bereich von Schneidkanten bei spanerzeugenden Werkzeugen mit geometrisch bestimmter Schneide durch Laserbestrahlung der Werkzeugoberfläche, wobei mit Hilfe der Laserbestrahlung zumindest die Spanflächen mit einem die Oberflächenstruktur verändernden geometrischen Muster (20, 32) versehen werden, dadurch gekennzeichnet, daß das Muster (20, 32) im geringen Abstand zur Schneidkante (16, 18 36) angebracht wird.

2. Verfahren nach Anspruch 1, dadurch gekennzeichnet, daß das Muster (20, 32) aus einzelnen Strichen (22, 34) und/oder Punkten gebildet ist.

3. Verfahren nach Anspruch 2, dadurch gekennzeichnet, daß mindestens eine Spalte oder eine Spur aus parallelen Strichen (22, 34) und/oder punktförmigen parallelen Zeilen sich annähernd parallel zur Schneidkante erstreckt.

4. Verfahren nach Anspruch 2 oder 3, dadurch gekennzeichnet, daß die Striche (22, 34) sich im Winkel zur Schneidkante (16, 18, 36) erstrecken.

5. Verfahren nach einem der Ansprüche 1 bis 4, bei dem das Werkzeug nach seiner Formgebung zumindest im spanerzeugenden Bereich mit einer Hartstoffbeschichtung versehen wird, dadurch gekennzeichnet, daß das Muster vor dem Beschichten aufgebracht wird.

## Claims

1. A method for influencing the chip flow behaviour on tool surfaces in the region of cutting edges of chip-producing tools having a geometrically defined cutter by laser irradiation of the tool surface, wherein at least the tool faces are provided, by means of laser irradiation, with a geometric pattern (20, 32) changing the surface structure, characterized in that the pattern (20, 32) is applied at a slight distance from the cutting edge (16, 18, 36).

2. The method according to claim 1, characterized in that the pattern (20, 32) is formed from individual lines (22, 34) and/or points.

3. The method according to claim 2, characterized in that at least a strip or track of parallel lines (22, 34) and/or punctiform parallel rows extends approximately parallel with the cutting edge.

4. The method according to claim 2 or 3, characterized in that the lines (22, 34) extend at an angle to the cutting edge (16, 18, 36).

5. The method according to any of claims 1 to 4, wherein the tool, after being shaped, is provided with a coating of hard material at least in the chip-producing region, characterized in that the pattern is applied prior to coating.

## Revendications

1. Procédé pour influer sur le comportement du flux de copeaux de surfaces d'outil dans la zone des arêtes de coupe dans des outils travaillant par production de copeaux, ayant un tranchant géométriquement déterminé par irradiation au laser de la surface de l'outil, au moins les surfaces de formation de copeaux étant dotées d'un motif géométrique (20, 32) modifiant la structure de surface, à l'aide de l'irradiation au laser, caractérisé en ce que le motif (20, 32) est appliqué à faible distance de l'arête de coupe (16, 18, 36).

2. Procédé selon la revendication 1, caractérisé en ce que le motif (20, 32) est constitué de traits (22, 34) et/ou de points individuels.

3. Procédé selon la revendication 2, caractérisé en ce qu'au moins une colonne ou une piste, constituée de traits (22, 34) parallèles et/ou de lignes parallèles se présentant sous forme de points, s'étend à peu près parallèlement à l'arête de coupe.

4. Procédé selon la revendication 2 ou 3, caractérisé en ce que les traits (22, 34) s'étendent sous un angle par rapport à l'arête de coupe (16, 18, 36).

5. Procédé selon l'une des revendications 1 à 4, dans lequel, selon sa configuration, l'outil est doté d'un revêtement en substance dure, au moins dans la zone générant les copeaux, caractérisé en ce que le motif est appliqué avant l'opération de revêtement.
